# EUROPÄISCHE PATENTANMELDUNG

(11) **EP 3 693 135 A1**
(43) Veröffentlichungstag der Anmeldung: **12.08.2020**
(21) Anmeldenummer: 20155512.5
(22) Anmeldetag: 05.02.2020
(51) Int. Cl.: B25B 27/06, B25B 27/04, F16B 19/02

(54) **VERFAHREN ZUM HERAUSLÖSEN EINES SPANNSTIFTS SOWIE VORRICHTUNG ZUR DURCHFÜHRUNG DES VERFAHRENS**

(30) Priorität: 07.02.2019 DE 102019201575
(71) Anmelder: ZF Friedrichshafen AG, 88046 Friedrichshafen (DE)
(72) Erfinder: Miller, Martin, 88090 Immenstaad am Bodensee (DE); Wellhäuser, Herbert, 88099 Neukirch (DE); Kempf, Andreas, 88213 Ravensburg (DE)
(74) Vertreter: ZF Friedrichshafen AG

(57) **Zusammenfassung**

Die Erfindung bezieht sich auf ein Verfahren zum Herauslösen eines Spannstifts 6 aus einem koaxial in zwei zusammengefügten Bauteilen ausgebildeten Sacklochs 4 sowie Vorrichtung zur Durchführung des Verfahrens, wobei der Spannstift 6 eine axiale Durchgangsöffnung 9 sowie einen axial durchgehenden Schlitz 8 aufweist. Die Stirnseite 13 des in dem Sackloch 4 aufgenommenen Spannstifts 6 weist einen Abstand zum Grund 5 des Sacklochs 4 auf. Ein eine geringere radiale Erstreckung als die Durchgangsöffnung 9 aufweisender Schaft 10, 10' wird durch die Durchgangsöffnung 9 des Spannstifts 6 hindurch geführt und ein radialer Ansatz 11 an dem in die Durchgangsöffnung 9 eingeführten einen Ende des Schafts 10, 10' hintergreift die dem Grund 5des Sacklochs 4 zugewandte Stirnseite 13 des Spannstifts (6). Der Schaft 10, 10' wird an seinem anderen aus dem Sackloch 4 herausragenden Ende erfasst und in Ausziehrichtung des Spannstifts 6 aus dem Sackloch 4 kraftbeaufschlagt.

## Beschreibung

Die Erfindung bezieht sich auf ein Verfahren zum Herauslösen eines Spannstifts aus einem koaxial in zwei zusammengefügten Bauteilen ausgebildeten Sacklochs, wobei der Spannstift eine axiale Durchgangsöffnung sowie einen axial durchgehenden Schlitz aufweist.

Aus der DE 10 2013 004 803 A1 ist es bekannt von außen in die Durchgangsöffnung des Spannstifts ein Gewinde einzuschneiden. In dieses Gewinde wird dann eine Schraube eingeschraubt und durch Ziehen an der Schraube der Spannstift aus dem Sackloch herausgezogen.

Dieses Verfahren ist aufwendig und führt durch das Gewindeschneiden zu Metallspänen, die anschließend sorgfältig beseitigt werden müssen.

Aufgabe der Erfindung ist es daher ein Verfahren zum Herauslösen eines Spannstifts sowie eine Vorrichtung zur Durchführung des Verfahrens der eingangs genannten Art zu schaffen, das mit geringem Aufwand und einfachem Werkzeug durchführbar ist.

Diese Aufgabe wird erfindungsgemäß dadurch gelöst, dass die Stirnseite des in dem Sackloch aufgenommenen Spannstifts einen Abstand zum Grund des Sacklochs aufweist, dass ein eine geringere radiale Erstreckung als die Durchgangsöffnung aufweisender Schaft durch die Durchgangsöffnung des Spannstifts hindurch geführt wird und ein radialer Ansatz an dem in die Durchgangsöffnung eingeführten einen Ende des Schafts die dem Grund des Sacklochs zugewandte Stirnseite des Spannstifts hintergreift und dass der Schaft an seinem anderen aus dem Sackloch herausragenden Ende erfasst und in Ausziehrichtung des Spannstifts aus dem Sackloch kraftbeaufschlagt wird.

Dabei kann der Spannstift vollständig in dem Sackloch aufgenommen sein.

Durch dieses Verfahren wird der aufwendige Arbeitsschritt zum Schneiden eines Gewindes vermieden und es braucht auch kein Säuberungsvorgang zur Beseitigung der Späne durchgeführt werden.

Die Verwendung eines Sacklochs anstatt eines Durchgangslochs ist häufig zum Vorteil, wenn die zusammengefügten Bauteile mit Öl versorgt werden sollen.

In einer einfachen Ausbildung einer Vorrichtung zur Durchführung des Verfahrens können der Schaft und der radiale Ansatz einteilig ausgebildet sein.

Insbesondere kann dabei der Schaft zusammen mit dem radialen Ansatz eine größere radiale Erstreckung aufweisen als der Durchmesser der Durchgangsöffnung des Spannstifts sowie der radiale Ansatz eine geringere Breite aufweist als die Breite des Schlitzes des in die Durchgangsöffnung eingesetzten Spannstifts.

Mit diesem einfach ausgebildeten Werkzeug wird der Schaft durch die Durchgangsöffnung des Spannstifts hindurch geführt, wobei der radiale Ansatz in den Schlitz des Spannstifts ragt und durch dem Schlitz axial hindurchgeführt wird bis sich der radiale Ansatz außerhalb des Spannstifts befindet und dass danach der Schaft um einen Winkel < 360° um seine Längsachse gedreht sowie der Schaft an seinem anderen aus dem Sackloch herausragenden Ende erfasst und in Ausziehrichtung des Spannstifts aus dem Sackloch kraftbeaufschlagt wird.

Das Ausziehen des Spannstifts erfolgt vorzugsweise mit einer Abziehvorrichtung.

Dieses Verfahren ist ohne großen Aufwand schnell durchzuführen, so dass auch die Arbeitskosten gering gehalten werden.

In einer weiteren einfachen Ausbildung einer Vorrichtung zur Durchführung des Verfahrens können der Schaft und der radiale Ansatz zwei miteinander verbindbare Bauteile sein.

Zur einfachen Durchführung des Verfahrens können dabei der Schaft und der radiale Ansatz durch eine Schraubverbindung miteinander verbindbar sein.

Der radiale Ansatz kann ein Abzugselement, insbesondere eine Mutter sein oder eine Buchse mit Innengewinde sein.

Die Buchse ist bevorzugt aus Aluminium ausgebildet. Vorteilhaft weist sie ein axiale Länge auf, die größer als ein Durchmesser des Sacklochs ist, so dass die Buchse im Sackloch nicht verkanten kann.

Mit diesem Werkzeug wird vor Einsetzen des Spannstifts in das Sackloch das Abzugselement in das Sackloch eingeführt, das eine zur Durchgangsöffnung des Spannstifts axiale Gewindebohrung sowie eine größere radiale Erstreckung als der Spannstift aufweist, wobei das Gewinde der Gewindebohrung einen kleineren Durchmesser aufweist, als der Innendurchmesser des in das Sackloch eingesetzten Spannstifts, dass durch die Durchgangsöffnung des in das Sackloch eingesetzten Spannstifts eine Gewindestange hindurchgeführt wird, bis sich das dem Grund des Sacklochs nähere eine Ende der Gewindestange außerhalb des Spannstifts befindet, dass danach dieses eine Ende durch Drehen der Gewindestange in die Gewindebohrung des Abzugselements eingeschraubt wird sowie die Gewindestange an ihrem anderen aus dem Sackloch herausragenden Ende erfasst und in Ausziehrichtung des Spannstifts aus dem Sackloch kraftbeaufschlagt wird.

Auch bei diesem Verfahren erfolgt das Ausziehen des Spannstifts vorzugsweise mit einer Abziehvorrichtung.

Auch dieses Verfahren ist ohne großen Aufwand schnell durchzuführen, so dass auch die Arbeitskosten gering gehalten werden.

Die zusammengefügten Bauteile können ein Planetenträger und ein in eine Durchgangsbohrung des Planetenträgers eingesetzter Planetenbolzen eines Planetengetriebes sein.

Dabei wird der Planetenbolzen durch den Spannstift im Planetenträger positioniert und fixiert.

Ausführungsbeispiele der Erfindung sind in der Zeichnung dargestellt und werden im Folgenden näher beschrieben. Es zeigen:
- Figur 1: einen Querschnitt eines Ausschnitts eines in eine Durchgangsbohrung eines Planetenträgers eingesetzten Planetenbolzens mit eingeführten Schaft eines ersten Ausführungsbeispiels der Erfindung
- Figur 1a: einen Längsschnitt der Darstellung aus Figur 1
- Figur 1b: einen Schnitt entlang der Linie I-I in Figur 1a
- Figur 2: einen Querschnitt eines Ausschnitts des in eine Durchgangsbohrung des Planetenträgers eingesetzten Planetenbolzens nach Figur 1 mit eingeführtem und um seine Längsachse verdrehtem Schaft
- Figur 2a: einen Längsschnitt der Darstellung aus Figur 2
- Figur 2b: einen Schnitt entlang der Linie II-II in Figur 2a
- Figur 3: eine Seitenansicht eines Schafts der Darstellung nach Figur 1
- Figur 3a: eine Draufsicht des Schafts nach Figur 3
- Figur 3b: eine Stirnansicht des Schafts nach Figur 3
- Figur 4: einen Querschnitt eines Ausschnitts eines in eine Durchgangsbohrung eines Planetenträgers eingesetzten Planetenbolzens mit eingeführten Schaft und nichtausgerichteter Mutter eines zweiten Ausführungsbei-spiels der Erfindung
- Figur 4a: einen Längsschnitt der Darstellung aus Figur 4
- Figur 4b: einen Schnitt entlang der Linie III-III in Figur 4a
- Figur 5: einen Querschnitt eines Ausschnitts des Planetenbolzens mit eingeführten Schaft und ausgerichteter Mutter nach Figur 4
- Figur 5a: einen Längsschnitt der Darstellung aus Figur 5
- Figur 5b: einen Schnitt entlang der Linie IV-IV in Figur 5a
- Figur 6: einen Querschnitt eines Ausschnitts des Planetenbolzens mit eingeführten Schaft, mit eingeführtem Schaft und ausgerichteter Mutter nach Figur 5
- Figur 6a: einen Längsschnitt der Darstellung aus Figur 6
- Figur 6b: einen Schnitt entlang der Linie V-V in Figur 6a

In den Figuren ist ein Ausschnitt eines Planetenträgers 1 dargestellt, der eine Durchgangsbohrung 2 aufweist, in die ein Planetenbolzen 3 eingesetzt ist.

Ein Sackloch 4 ist koaxial in Planetenbolzen 3 ausgebildet, wobei das Sackloch 4 mit seinem ersten Ende an der freien Peripherie des Planetenträgers 1 nach außen mündet. Das den Grund 5 des Sacklochs 4 aufweisende zweite Ende des Sacklochs 4 befindet sich im Planetenbolzen 3.

Vom ersten Ende des Sacklochs 4 her wird ein Spannstift 6 in das Sackloch 4 so weit eingeführt, dass die dem Grund 5 nähere Stirnseite 13 des Spannstifts 6 einen Abstand zum Grund 5 des Sacklochs 4 aufweist. Somit ist zwischen dem Grund 5 des Sacklochs 4 und dem Spannstift 6 ein Raum 7 gebildet.

Der eine zentrische Durchgangsöffnung und einen axial durchgehenden Schlitz 8 aufweisende Spannstift 6 ist mit Presspassung in das Sackloch 4 und in den Planetenträger 1 eingesetzt.

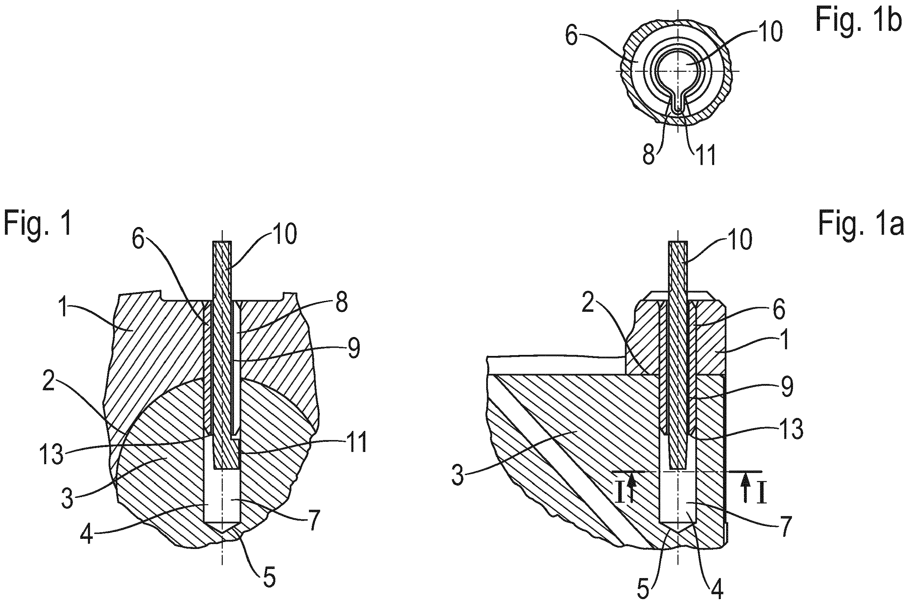

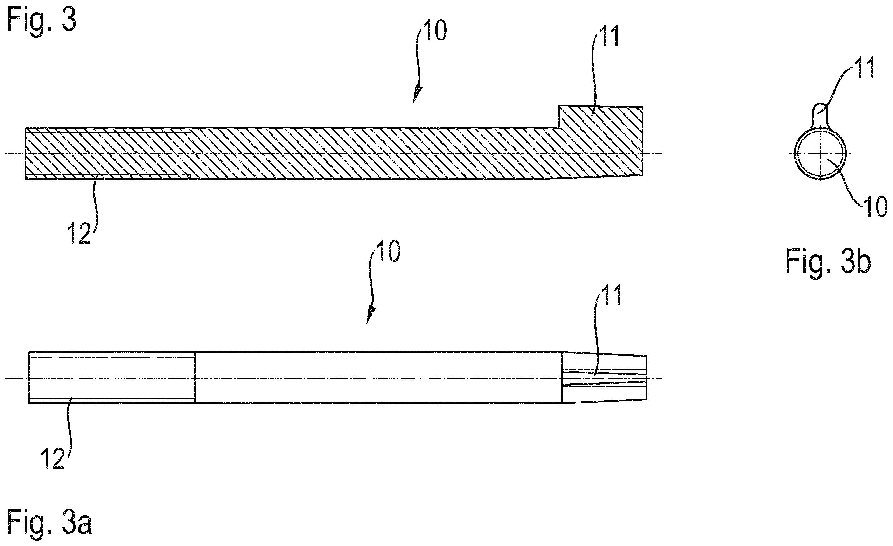

Zum Herauslösen des Spannstifts 6 aus dem Sackloch 4 wird bei dem Ausführungsbeispiel der Figuren 1 bis 3 das in Figur 3b dargestellte Werkzeug benutzt.

Dieses Werkzeug weist einen Schaft 10 auf, dessen Durchmesser kleiner ist als der Durchmesser der Durchgangsöffnung 9 des Spannstifts 6.
An dem einen Ende des Schafts 10 ist ein hervorstehender radialer Ansatz 11 ausgebildet, der radial über den Durchmesser der Durchgangsöffnung 9 hervorragt und der in Längserstreckungsrichtung des Schafts eine Breite aufweist, die geringer ist als die Breite des Schlitzes 8.

An seinem anderen Ende ist der Schaft 10 mit einem Gewinde 12 versehen, an dem eine nicht dargestellte Abziehvorrichtung mit dem Schaft 10 verbindbar ist.

Zum Herauslösen des Spannstifts 6 aus dem Sackloch 4, damit der Planetenbolzen 3 von dem Planetenträger 1 demontierbar ist, wird der Schaft 10 mit seinem den radialen Ansatz 11 aufweisenden Ende zuerst in die Durchgangsöffnung 9 eingeführt, wobei der radiale Ansatz 11 in den Schlitz 8 des Spannstifts 6 ragt.

Der Schaft 10 wird so weit in die Durchgangsöffnung 9 eingeführt bis der radiale Ansatz 11 sich vollständig in dem Raum 7 befindet (Figuren 1 bis 1b).

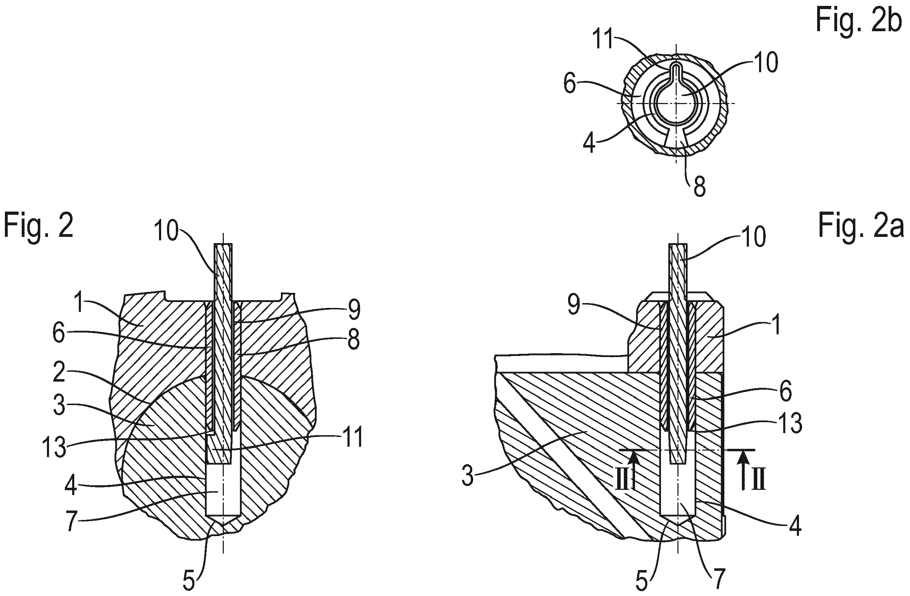

Nun wird der Schaft 10 beispielsgemäß um 180° um seine Längsachse gedreht, so dass der radiale Ansatz 11 die Stirnseite 13 des Spannstifts 6 hintergreift (Figuren 2 bis 2b).

Wird nun mittels der Abziehvorrichtung der Schaft 10 in Ausziehrichtung kraftbeaufschlagt, wird die Haltekraft der Presspassung, mit der der Spannstift 6 in dem Sackloch 4 gehalten ist, überwunden und der Spannstift 6 aus dem Sackloch 4 herausgezogen.

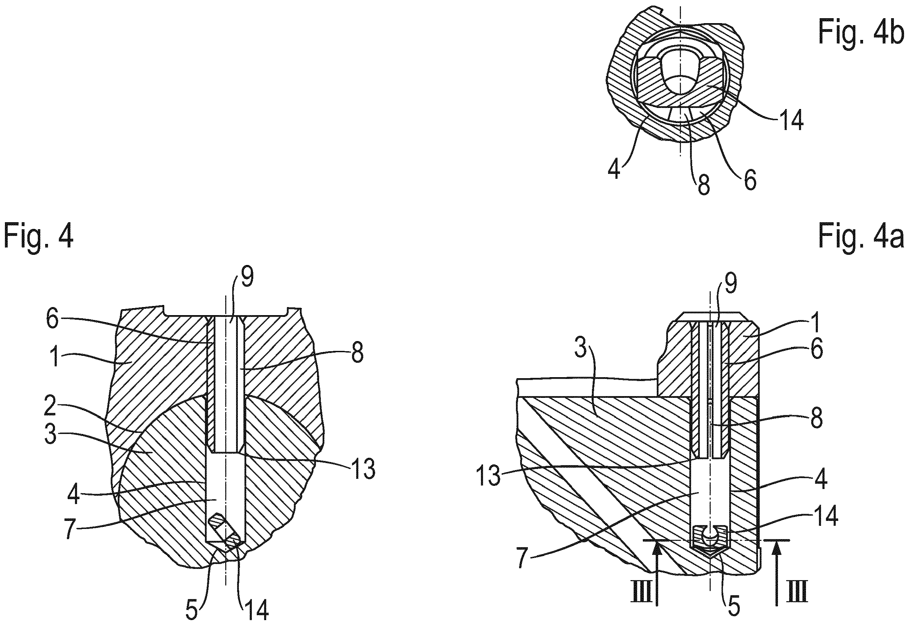

Das Herauslösen des Spannstifts 6 aus dem Sackloch 4 erfolgt bei dem Ausführungsbeispiel der Figuren 4 bis 6b wie folgt.

Vor dem Einsetzen des Spannstifts 6 in das Sackloch 4 wird zuerst eine Mutter 14 bis zum Grund 5 in das Sackloch 4 eingeführt.

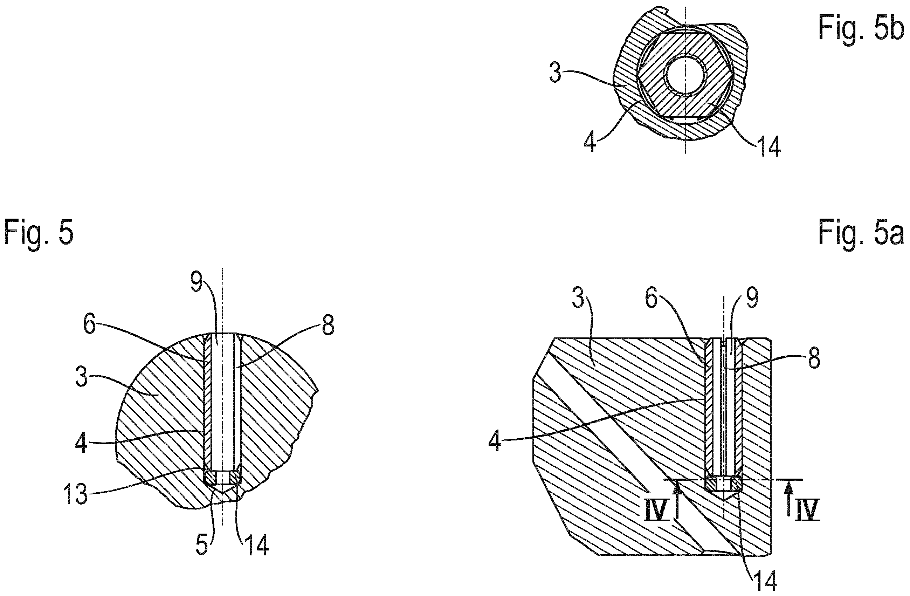

Zur Demontage wird der Spannstift 6 in das Sackloch 4 eingeführt. Wenn der Spannstift komplett in die Sacklochbohrung des Bolzens getrieben wurde, kann der Bolzen aus dem Planetenträger demontiert werden. Die Mutter 14 befindet sich dann in dem Raum 7 zwischen der Stirnseite 13 des Spannstifts 6 und dem Grund 5 des Sacklochs 4 (Figuren 5 bis 5b).

Die Mutter 14 hat eine radiale Erstreckung, die größer ist als der Durchmesser der Durchgangsöffnung 9. Das Gewinde der Mutter 14 hat einen geringeren Außendurchmesser als der Durchmesser der Durchgangsöffnung 9.

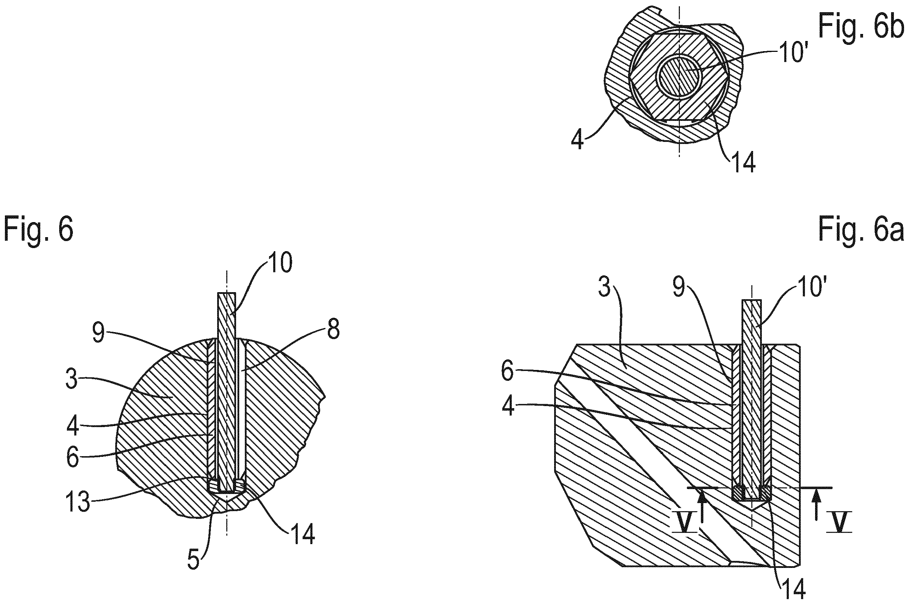

Ein als Gewindestange ausgebildeter Schaft 10' wird nun von außen durch die Durchgangsöffnung 9 geführt und in das Gewinde der Mutter 14 eingeschraubt (Figuren 6 bis 6b). Sollte die Mutter 14 nicht axial zur Längsachse des Sacklochs 4 sein, kann sie jetzt mittels eines nadelartigen Werkzeugs in eine axiale Lage gebracht werden (Figuren 4 bis 4b). Alternativ kann der Spannstift 6 soweit in das Sackloch 4 getrieben werden, dass er die Mutter 14 axial ausrichtet und dabei festklemmt, so dass ein Mitdrehen der Mutter 14 beim Einschrauben des Schafts 10' vermieden wird.

Wird nun mittels der Abziehvorrichtung der Schaft 10' in Ausziehrichtung kraftbeaufschlagt, wird die Haltekraft der Presspassung, mit der der Spannstift 6 in dem Sackloch 4 gehalten ist, überwunden und der Spannstift 6 aus dem Sackloch 4 herausgezogen.

### Bezugszeichen

- 1: Planetenträger
- 2: Bohrung
- 3: Planetenbolzen
- 4: Sackloch
- 5: Grund
- 6: Spannstift
- 7: Raum
- 8: Schlitz
- 9: Durchgangsöffnung
- 10: Schaft
- 10': Schaft
- 11: radialer Ansatz
- 12: Gewinde
- 13: Stirnseite
- 14: Mutter

## Patentansprüche

1. Verfahren zum Herauslösen eines Spannstifts (6) aus einem koaxial in zwei zusammengefügten Bauteilen ausgebildeten Sacklochs (4), wobei der Spannstift (6) eine axiale Durchgangsöffnung (9) sowie einen axial durchgehenden Schlitz (8) aufweist, **dadurch gekennzeichnet, dass** die Stirnseite (13) des in dem Sackloch (4) aufgenommenen Spannstifts (6) einen Abstand zum Grund (5) des Sacklochs (4) aufweist, dass ein eine geringere radiale Erstreckung als die Durchgangsöffnung (9) aufweisender Schaft (10, 10') durch die Durchgangsöffnung (9) des Spannstifts (6) hindurch geführt wird und ein radialer Ansatz (11) an dem in die Durchgangsöffnung (9) eingeführten einen Ende des Schafts (10, 10') die dem Grund (5) des Sacklochs (4) zugewandte Stirnseite (13) des Spannstifts (6) hintergreift und dass der Schaft (10, 10') an seinem anderen aus dem Sackloch (4) herausragenden Ende erfasst und in Ausziehrichtung des Spannstifts (6) aus dem Sackloch (4) kraftbeaufschlagt wird.

2. Vorrichtung zur Durchführung des Verfahrens nach Anspruch 1, **dadurch gekennzeichnet, dass** der Schaft (10) und der radiale Ansatz (11) einteilig ausgebildet sind.

3. Vorrichtung nach Anspruch 2, **dadurch gekennzeichnet, dass** der Schaft zusammen mit dem radialen Ansatz (11) eine größere radiale Erstreckung aufweisen als der Durchmesser der Durchgangsöffnung (9) des Spannstifts (6) sowie der radiale Ansatz (11) eine geringere Breite aufweist als die Breite des Schlitzes (8) des in die Durchgangsöffnung (9) eingesetzten Spannstifts (6).

4. Verfahren nach Anspruch 1 mit einer Vorrichtung nach Anspruch 3, **dadurch gekennzeichnet, dass** der Schaft (10) durch die Durchgangsöffnung (9) des Spannstifts (6) hindurch geführt wird wobei der radiale Ansatz (11) in den Schlitz (8) des Spannstifts (6) ragt und durch dem Schlitz (8) axial hindurchgeführt wird bis sich der radiale Ansatz (11) außerhalb des Spannstifts (6) befindet und dass danach der Schaft (10) um einen Winkel < 360° um seine Längsachse gedreht sowie der Schaft (10) an seinem anderen aus dem Sackloch (4) herausragenden Ende erfasst und in Ausziehrichtung des Spannstifts (6) aus dem Sackloch (4) kraftbeaufschlagt wird.

5. Vorrichtung zur Durchführung des Verfahrens nach Anspruch 1, **dadurch gekennzeichnet, dass** der Schaft (10') und der radiale Ansatz zwei miteinander verbindbare Bauteile sind.

6. Vorrichtung nach Anspruch 5, **dadurch gekennzeichnet, dass** der Schaft (10') und der radiale Ansatz durch eine Schraubverbindung miteinander verbindbar sind.

7. Vorrichtung nach Anspruch 6, **dadurch gekennzeichnet, dass** der radiale Ansatz ein Abzugselement ist.

8. Vorrichtung nach Anspruch 7, **dadurch gekennzeichnet, dass** das Abzugselement eine Mutter (14) oder eine Buchse mit Innengewinde ist.

9. Verfahren nach Anspruch 1 mit einer Vorrichtung nach einem der Ansprüche 7 und 8, **dadurch gekennzeichnet, dass** vor Einsetzen des Spannstifts (6) in das Sackloch (4) das Abzugselement in das Sackloch (4) eingeführt wird, das eine zur Durchgangsöffnung (9) des Spannstifts (6) axiale Gewindebohrung sowie eine größere radiale Erstreckung als der Spannstift (6) aufweist, wobei das Gewinde (12) der Gewindebohrung einen kleineren Durchmesser aufweist, als der Innendurchmesser des in das Sackloch (4) eingesetzten Spannstifts (6), dass durch die Durchgangsöffnung (9) des in das Sackloch (4) eingesetzten Spannstifts (6) eine Gewindestange hindurchgeführt wird, bis sich das dem Grund (5) des Sacklochs (4) nähere eine Ende der Gewindestange außerhalb des Spannstifts (6) befindet, dass danach dieses eine Ende durch Drehen der Gewindestange in die Gewindebohrung des Abzugselements eingeschraubt wird sowie die Gewindestange an ihrem anderen aus dem Sackloch (4) herausragenden Ende erfasst und in Ausziehrichtung des Spannstifts(6) aus dem Sackloch (4) kraftbeaufschlagt wird.

10. Verfahren nach Anspruch 8, **dadurch gekennzeichnet, dass** die zusammengefügten Bauteile ein Planetenträger (1) und ein in eine Durchgangsbohrung (2) des Planetenträgers (1) eingesetzter Planetenbolzen (3) eines Planetengetriebes ist.
